# EUROPEAN PATENT APPLICATION

(11) **EP 4 503 594 A1**
(43) Date of publication of application: **05.02.2025**
(21) Application number: 22934670.5
(22) Date of filing: 30.08.2022
(51) Int. Cl.: H04N 5/445, H04N 5/262, H04N 21/431

(54) **VIDEO IMAGE PROCESSING METHOD AND APPARATUS, AND DEVICE AND STORAGE MEDIUM**

(30) Priority: 31.03.2022 CN 202210333869
(71) Applicant: Amlogic (Shanghai) Co., Ltd., Shanghai 201203 (CN)
(72) Inventor: FENG, Xuequan, Shanghai 201203 (CN)
(74) Representative: Maiwald GmbH
(86) International application number: PCT/CN2022/115939
(87) International publication number: WO 2023/184850

(57) **Abstract**

The present disclosure relates to a video image processing method and apparatus, and device and storage medium,, wherein the apparatus comprises: an obtaining unit configured to obtain an area to be superimposed in a video image, wherein the area to be superimposed contains a plurality of display blocks; an optical parameter statistical unit configured to perform optical parameter statistical processing on each display block to obtain an optical parameter statistical value, wherein the optical parameter statistical unit is a hardware unit; determining unit configured to determine whether an adjustment processing needs to be performed on the target display character based on a difference value between the optical parameter statistical value and an optical parameter value of a target display character; a character adjusting unit configured to perform adjustment processing on the target display character to obtain a superimposed character in response to a determination that the difference value is less than or equal to a preset threshold, wherein a difference value between an optical parameter value of the superimposed character and the optical parameter statistical value of a corresponding display block is greater than the preset threshold; and a first subunit configured to superimpose the superimposed character with the corresponding display block. The above scheme is beneficial to reducing CPU load, amount of computing, and bandwidth, and also helps reduce the complexity of chip design and the area occupied by the chip.

## Description

### TECHNICAL FIELD

The present disclosure relates to the technical field of image processing, and in particular, to a video image processing method and apparatus, and device and storage medium.

### BACKGROUND

Video image processing techniques are widely used in intelligent video image analysis techniques.

Among them, On-Screen Display, referred to as OSD, is an image superimposed on the display screen, usually applied to CRT/LCD monitors, VCRs, and DVD players to produce some special glyphs or graphics on the display screen, so that the user can get some information, such as station labels, trademarks, lines, system menus and so on.

However, currently, the CPU load and bandwidth of video image processing are high, the design complexity of relevant chips is high, and the area occupied by the chip is large.

### SUMMARY

Some embodiments of the present disclosure provide a video image processing method and apparatus, and device and storage medium, to reduce CPU load, amount of computing, and bandwidth, and also help reduce the complexity of chip design and the area occupied by the chip.

In some embodiments, a video image processing method, comprising: obtaining an area to be superimposed in a video image, wherein the area to be superimposed contains a plurality of display blocks; performing optical parameter statistical processing on each display block by an optical parameter statistical unit to obtain an optical parameter statistical value, wherein the optical parameter statistical unit is a hardware unit; based on a difference value between the optical parameter statistical value and an optical parameter value of a target display character, determining whether an adjustment processing needs to be performed on the target display character; in response to a determination that the difference value is less than or equal to a preset threshold, performing adjustment processing on the target display character to obtain a superimposed character, wherein a difference value between an optical parameter value of the superimposed character and the optical parameter statistical value of a corresponding display block is greater than the preset threshold; and performing character superimposition processing on the area to be superimposed, wherein the character superimposition processing comprises: superimposing the superimposed character with the corresponding display block.

The technical solutions of embodiments of the present disclosure have the following advantages: in some embodiments, a video image processing method and apparatus, and device and storage medium provided by embodiments of the present disclosure, wherein the video image processing method performs optical parameter statistical processing on each display block by an optical parameter statistical unit to obtain an optical parameter statistical value, wherein the optical parameter statistical unit is a hardware unit; based on a difference value between the optical parameter statistical value and an optical parameter value of a target display character, determines whether an adjustment processing needs to be performed on the target display character; in response to a determination that the difference value is less than or equal to a preset threshold, performs adjustment processing on the target display character; therefore, the embodiments of the present disclosure completes the statistics of local optical parameters of video images by adding a small number of hardware units without using software to perform optical parameter statistical processing, which correspondingly reduces the CPU load, amount of computation and bandwidth, and requires little modification to the hardware modules, which is also beneficial to reducing the complexity of chip design and area occupied by the chip.

In some embodiments, a video image processing apparatus, comprising: an obtaining unit configured to obtain an area to be superimposed in a video image, wherein the area to be superimposed contains a plurality of display blocks; an optical parameter statistical unit configured to perform optical parameter statistical processing on each display block to obtain an optical parameter statistical value, wherein the optical parameter statistical unit is a hardware unit; a determining unit configured to determine whether an adjustment processing needs to be performed on the target display character based on a difference value between the optical parameter statistical value and an optical parameter value of a target display character; a character adjusting unit configured to perform adjustment processing on the target display character to obtain a superimposed character in response to a determination that the difference value is less than or equal to a preset threshold, wherein a difference value between an optical parameter value of the superimposed character and the optical parameter statistical value of a corresponding display block is greater than the preset threshold; and a character superimposing unit configured to perform character superimposition processing on the area to be superimposed, wherein the character superimposing unit comprises: a first subunit configured to superimpose the superimposed character with the corresponding display block.

In some embodiments, a device comprising at least one memory and at least one processor, the memory stores at least one or more computer instructions, wherein one or more computer instructions are executed by the processor to implement the video image processing method provided by the embodiments of the present disclosure.

In some embodiments, a storage medium, wherein the storage medium stores at least one or more computer instructions, one or more computer instructions are executed to implement the video image processing method provided by the embodiments of the present disclosure.

### BRIEF DESCRIPTION OF THE DRAWINGS

The accompanying drawings, which comprise a part of this specification, illustrate several embodiments and, together with the description, serve to explain the principles and features of the disclosed embodiments. In the drawings:
FIG. 1 shows a schematic flow diagram of a video image processing method provided by an embodiment of the present disclosure.
FIG. 2 shows an area to be superimposed in a frame of video image.
FIG. 3 shows a schematic block diagram of a video image processing apparatus in an embodiment of the present disclosure.
FIG. 4 shows a schematic structural diagram of an optional hardware structure of the device provided by the embodiment of the present disclosure.

### DETAILED DESCRIPTION

It can be known from the background that currently the CPU load and bandwidth of video image processing are high, the design complexity of relevant chips is high, and the area occupied by the chip is large.

Specifically, there are usually two methods for video image processing.

One is a pure software implementation method, in which the CPU reads the area to be superimposed in the video image and divides the area to be superimposed into multiple display blocks, then performs brightness statistical processing on each display block to obtain a brightness statistical value, and then determines whether each display block needs to be adjusted based on the difference value between the brightness statistical value and the brightness value of the target display character.

The pure software implementation method has high flexibility. However, when there are many locations or large areas of the areas to be superimposed, it will generate a large bandwidth and amount of CPU computing.

The other is a hardware implementation method, in which the video superimposing module in the chip has integrated the brightness adjustment processing function, and the CPU only needs to configure the corresponding brightness adjustment processing settings for the video superimposing module. The hardware implementation method basically does not require CPU participation, but a video superimposition processing module requires a corresponding brightness adjustment unit, which increases the complexity of chip design and the area occupied by the chip. In addition, the hardware implementation method easily reduces the flexibility of video image processing and cannot expand functions.

Therefore, there is an urgent need for a video image processing method that can reduce CPU load and bandwidth while ensuring low chip design complexity and a small area occupied by the chip.

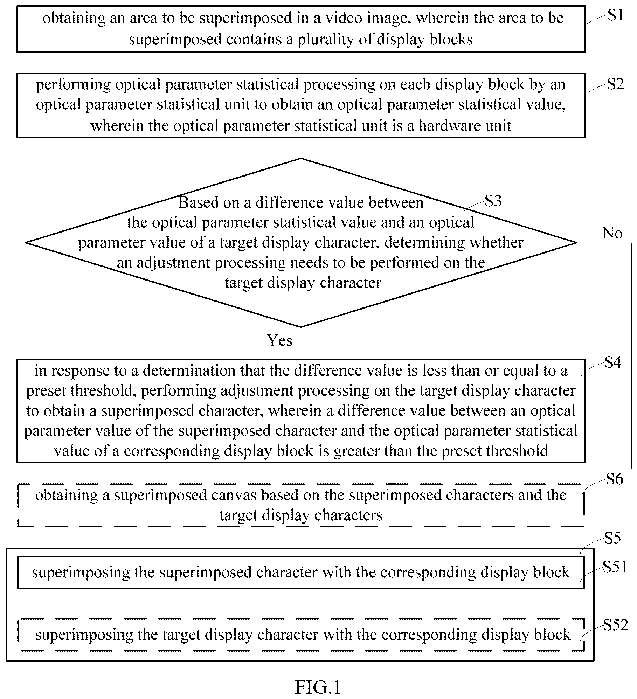

To solve the above problems, the embodiments of the present disclosure provide a video image processing method. Referring to FIG. 1, which shows a schematic flow diagram of a video image processing method provided by an embodiment of the present disclosure.

In an embodiment of the present disclosure, the video image processing method comprises the following basic steps:
step S1: obtaining an area to be superimposed in a video image, wherein the area to be superimposed contains a plurality of display blocks;
step S2: performing optical parameter statistical processing on each display block by an optical parameter statistical unit to obtain an optical parameter statistical value, wherein the optical parameter statistical unit is a hardware unit;
step S3: based on a difference value between the optical parameter statistical value and an optical parameter value of a target display character, determining whether an adjustment processing needs to be performed on the target display character;
step S4: in response to a determination that the difference value is less than or equal to a preset threshold, performing adjustment processing on the target display character to obtain a superimposed character, wherein a difference value between an optical parameter value of the superimposed character and the optical parameter statistical value of a corresponding display block is greater than the preset threshold; and
step S5: performing character superimposition processing on the area to be superimposed, wherein the character superimposition processing comprises step S51: superimposing the superimposed character with the corresponding display block.

Wherein the video image processing method performs optical parameter statistical processing on each display block by an optical parameter statistical unit to obtain an optical parameter statistical value, wherein the optical parameter statistical unit is a hardware unit; based on a difference value between the optical parameter statistical value and an optical parameter value of a target display character, determines whether an adjustment processing needs to be performed on the target display character; in response to a determination that there is a need to perform optical parameter statistical adjustment processing, perform optical parameter statistical adjustment processing on the target display character; therefore, the embodiments of the present disclosure completes the statistics of local optical parameters of video images by adding a small number of hardware units without using software to perform optical parameter statistical processing, which correspondingly reduces the CPU load, amount of computation and bandwidth, and requires little modification to the hardware modules, which is also beneficial to reducing the complexity of chip design and area occupied by the chip.

To make the above purposes, features, and advantages of the present disclosure more apparent and easier to understand, a detailed description of specific embodiments of the present disclosure will be given below in conjunction with the accompanying drawings.

Referring to FIG. 1, step S1: obtaining an area to be superimposed in a video image, wherein the area to be superimposed contains a plurality of display blocks. The area to be superimposed is the area in the original video image where characters need to be superimposed.

Specifically, based on actual needs, content such as menus, prompt information, dates, addresses, icons (such as logos), camera information, etc. can be superimposed in the area to be superimposed, thereby providing additional display information based on the video screen.

The area to be superimposed contains a plurality of display blocks so that subsequently the brightness statistical unit can perform brightness statistics on each display block respectively.

Specifically, in an embodiment of the present disclosure, obtaining the position information of the area to be superimposed, and the position information and size of the display block. In a specific implementation, based on the size of the superimposed characters and the position information of the superimposed characters in the original video image, obtaining the position information of the area to be superimposed, and the position information and size of the display block.

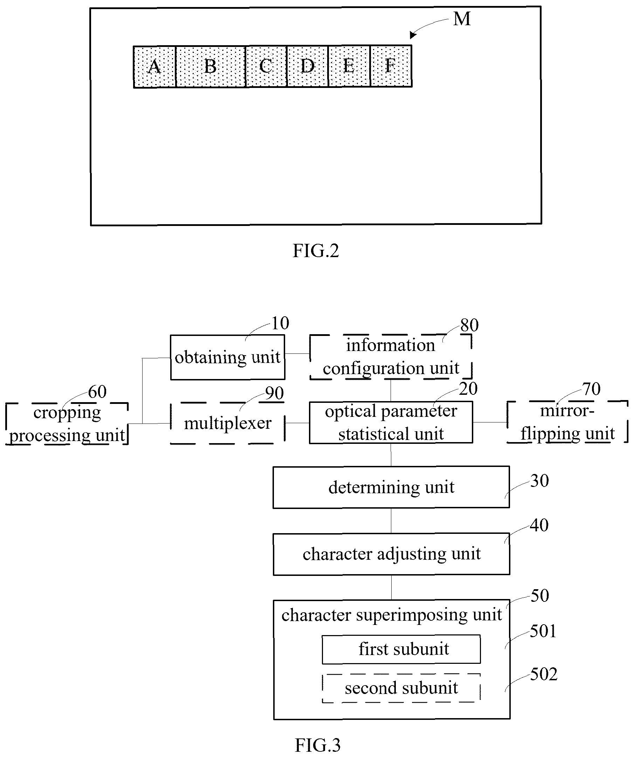

With reference to FIG. 2, an area M to be superimposed in a frame of video image is shown. As shown in FIG. 2, as an embodiment, the area to be superimposed includes 6 display blocks: A, B, C, D, E, and F. In an embodiment of the present disclosure, the shape of the display block is a rectangle.

In a specific implementation, the size and number of the display blocks can be flexibly set according to actual needs, and the size of the display blocks can be the same or different.

As an example, the steps of obtaining the area to be superimposed and the display blocks include: obtaining the area to be superimposed in the video image; and performing area division processing on the area to be superimposed to obtain the multiple display blocks. That is to say, the area to be superimposed is firstly acquired, and then the area to be superimposed is divided into a plurality of the display blocks.

In a specific implementation, based on the size of the superimposed characters, performing area division processing on the area to be superimposed to obtain the multiple display blocks. For example, if the size of the superimposed characters is 32*32, then the size of the display block is 32*32 or 16*32.

Accordingly, in an embodiment of the present disclosure, the display block corresponds to one or more superimposed characters.

It should be noted that, in an embodiment of the present disclosure, the video image processing method further comprising: performing post-processing on the video image, wherein the post-processing comprises: performing cropping processing on the video image and outputting a cropped image.

Performing cropping processing on the video image to retain only the required image content, thereby determining the final output image size. In an embodiment of the present disclosure, the cropped image includes multiple rows of sub-images.

In other embodiments, the cropping processing step may be omitted.

Correspondingly, in an embodiment of the present disclosure, obtaining an area to be superimposed in a video image comprises: obtaining an area to be superimposed in the cropped image.

The size of the final output video image can be confirmed by cropped video images. By obtaining the area to be superimposed in the cropped image, the information of the area to be superimposed can be obtained based on the size of the final output image, and the position accuracy of the area to be superimposed can be ensured accordingly.

Moreover, in the field of image processing, in the process of post-processing the video image, the pixel information at each position in the image is usually obtained, such as the optical parameter value of each pixel. By performing optical parameter statistical processing after the cropping processing in post-processing, it is possible to directly perform optical parameter statistical processing based on the optical parameter values of pixels at various positions output by the cropping processing without calling data from DDR and generating additional DDR reading and writing, which is beneficial to reducing the amount of computation, CPU load, and bandwidth.

In addition, in the field of image processing, a post-processing module is usually used to perform post-processing on video images. Accordingly, the optical parameter statistical unit can be attached to the post-processing module and can be easily designed as an online module, which correspondingly reduces the changes to the existing hardware modules, thereby reducing the complexity of chip design and is beneficial to saving chip area.

It should be noted that, in an embodiment of the present disclosure, in the step of performing cropping processing on the video image, outputting multiple cropped images with different resolutions.

Specifically, in an embodiment of the present disclosure, the post-processing further comprises: before performing cropping processing on the video image, performing scaling processing on the video image to output multiple video images with different resolutions.

Performing scaling processing on the video image to output multiple video images with different resolutions, thereby meeting the requirements for different resolutions in different scenarios.

Accordingly, after performing cropping processing on the video image, performing cropping processing on the multiple video images with different resolutions respectively to output the multiple cropped images with different resolutions.

In other embodiments, the scaling processing can also be omitted.

It should also be noted that, in an embodiment of the present disclosure, the video image processing method is applied to a surveillance camera scenario as an example for explanation, and the post-processing further includes: before performing scaling processing, performing covering processing on the video image.

Performing covering processing on the video image, so that based on actual needs, covering the area in the video image that is not expected to be exposed (for example: the area in the image that may expose personal privacy).

Specifically, the area in the video image that is not expected to be exposed can be covered with a pure color area.

In other embodiments, based on actual needs, the step of the covering processing can also be omitted.

In an embodiment of the present disclosure, the video image processing method further comprising: after obtaining an area to be superimposed and the display blocks, configuring information of the display block to the optical parameter statistical unit.

Configuring information of the display block to the optical parameter statistical unit, so that subsequently the optical parameter statistical unit can perform optical parameter statistical processing on the display block based on the configured information of the display block.

In an embodiment of the present disclosure, the information of the display blocks includes position information and size information of each display block.

In a specific implementation, it can be CPU that obtains the information of the area to be superimposed and the display blocks, and then configures information of the display block to the optical parameter statistical unit.

Specifically, after CPU obtains the information of the area to be superimposed and the display blocks, CPU stores the information of the area to be superimposed and the display block in a register so that the optical parameter statistical unit acquires the information of the area to be superimposed and the display block from the register.

In a specific implementation, the register may be configured inside the post-processing module.

Continuing to refer to FIG. 1, step S2: performing optical parameter statistical processing on each display block by an optical parameter statistical unit to obtain an optical parameter statistical value, wherein the optical parameter statistical unit is a hardware unit.

Performing optical parameter statistical processing on display blocks by an optical parameter statistical unit to obtain an optical parameter statistical value, thereby it is possible to determine whether an adjustment processing needs to be performed on the target display character based on a difference value between the optical parameter statistical value and an optical parameter value of a target display character.

The optical parameter statistical unit is a hardware unit, therefore, an embodiment of the present disclosure completes the statistics of local optical parameters of video images by adding a small number of hardware units without using software to perform optical parameter statistical processing, which correspondingly reduces the CPU load, amount of computation and bandwidth, and requires little modification to the hardware modules, which is also beneficial to reducing the complexity of chip design and area occupied by the chip.

In an embodiment of the present disclosure, performing optical parameter statistical processing on each display block comprises: obtaining the optical parameter statistical value of all pixels in each display block. Wherein, the optical parameter statistical value of the pixel may be the sum of the optical parameters of all pixels, or may be the average value of the optical parameters of all pixels.

In a specific implementation, the optical parameter is brightness; the optical parameter statistical unit is a brightness statistical unit; performing optical parameter statistical processing on each display block comprises: performing brightness statistical processing on each display block by the brightness statistical unit to obtain a brightness statistical value.

Wherein, the brightness statistical value of the pixel may be the sum of the brightness value of all pixels in the current display block, or may be the average value of the brightness value of all pixels in the current display block.

It should be noted that, in an embodiment of the present disclosure, the optical parameter is brightness, the optical parameter statistical unit being a brightness statistical unit is only an example, and the implementation of the optical parameter statistical unit is not limited thereto.

For example: the optical parameter is chromaticity; the optical parameter statistical unit is a chromaticity statistical unit; the chromaticity statistical unit is configured to perform chromaticity statistical processing on each display block to obtain chromaticity statistical value. By obtaining the chromaticity statistical value, each display block can be subsequently compared with the chromaticity value of the corresponding target display character, thereby determining whether adjustment processing needs to be performed on the target display character.

The optical parameter statistical unit is a hardware unit. As an example, the optical parameter statistical unit can be a logic electrical circuit.

In an embodiment of the present disclosure, the video image processing method further comprising: selecting one cropped image from multiple cropped images during different time periods and outputting it to the optical parameter statistical unit.

Selecting one cropped image from multiple cropped images during different time periods and outputting it to the optical parameter statistical unit, so that in different time periods, the optical parameter statistical unit can perform optical parameter statistical processing on display blocks in cropped images with different resolutions, thereby enabling time-sharing multiplexing of the optical parameter statistical unit. Accordingly, there is no need to respectively set corresponding optical parameter statistical units for the plurality of cropped images, thereby helping to reduce the area occupied by the chip and saving costs.

In a specific implementation, the post-processing module reads and processes the image row by row. There is a corresponding row count inside the post-processing module. After processing the corresponding number of rows, the processing of one frame of the image is completed.

Correspondingly, in an embodiment of the present disclosure, the cropped image includes multiple rows of sub-images output sequentially; the multiple rows of sub-images are sequentially input to the optical parameter statistical unit.

Correspondingly, in an embodiment of the present disclosure, performing optical statistical processing on each display block by an optical parameter statistical unit comprises: determining whether the current row of sub-images contains the display block; if so, the optical parameter statistical unit performs optical parameter statistical processing on the display block in the current row of sub-images.

Since the cropped image is divided into multiple rows of sub-images, which are input into the optical parameter statistical unit in sequence, it is necessary to determine whether the current row of sub-images contains the display block, so that only the display blocks in the current row of sub-images containing the display blocks is determined, thereby reducing the amount of computation and ensuring that the optical parameter statistical unit correctly performs optical parameter statistical processing on the display blocks.

It should be noted that the post-processing further comprises: after performing optical parameter statistical processing on each of the display blocks, performing mirror/flipping processing on the cropped image, and outputting the processed image. In other embodiments, the mirror/flip processing can also be omitted.

Continuing to refer to FIG. 1, step S3: based on a difference value between the optical parameter statistical value and an optical parameter value of a target display character, determining whether an adjustment processing needs to be performed on the target display character.

Wherein the target display characters are characters that need to be superimposed and displayed on each display block in the area to be superimposed so that additional display information can be provided based on the video picture.

Based on a difference value between the optical parameter statistical value and an optical parameter value of a target display character, determining whether an adjustment processing needs to be performed on the target display character, thereby ensuring that the target display character can be normally displayed on each display block.

Specifically, the target display characters may include menus, prompt information, dates, addresses, icons (such as logos), camera information, and the like.

In an embodiment of the present disclosure, the display block corresponds to one or more superimposed characters. Therefore, based on a difference value between the optical parameter statistical value and an optical parameter value of a target display character, determining whether an adjustment processing needs to be performed on the target display character.

In an embodiment of the present disclosure, the optical parameter is brightness, therefore, based on a difference value between the brightness statistical value and an optical brightness value of a target display character, determining whether an adjustment processing needs to be performed on the target display character.

In other embodiments, the optical parameter may also be other types of optical parameters, such as chromaticity. Accordingly, based on a difference value between the chromaticity statistical value of the current block and the optical chromaticity value of the corresponding target display character, determining whether adjustment processing needs to be performed on the target display character.

Specifically, in an embodiment of the present disclosure, based on a difference value between the optical parameter statistical value and an optical parameter value of a target display character, determining whether an adjustment processing needs to be performed on the target display character comprises: determining whether the difference value is greater or equal to a preset threshold; in response to a determination that the difference value is less than or equal to a preset threshold, determine that it is necessary to perform adjustment processing on the target display character; in response to a determination that the difference value is greater than the preset threshold, determine that there is no need to perform adjustment processing on the target display character.

The difference value between the optical parameter statistical value and the optical parameter value of the target display character is compared with the preset threshold. When the difference value is less than or equal to the preset threshold, it indicates that the difference in optical parameters between the display block and the target display character is too small. If the display block and the corresponding target display character are directly superimposed, the target display character cannot be displayed normally on the display block. Therefore, it is determined that it is necessary to perform adjustment processing on the target display character so that the target display character can be displayed normally on the display block.

When the difference is greater than the preset threshold, it indicates that the optical parameter values between the display block and the target display character are sufficiently different, so that after the display block and the corresponding target display character are superimposed, the target display character can be normally displayed on the display block as the background.

In a specific implementation, the preset threshold is set based on an experience value or user preference.

Continuing to refer to FIG. 1, step S4: in response to a determination that the difference value is less than or equal to a preset threshold, performing adjustment processing on the target display character to obtain a superimposed character, wherein a difference value between an optical parameter value of the superimposed character and the optical parameter statistical value of a corresponding display block is greater than the preset threshold.

When the difference value is less than or equal to the preset threshold, it indicates that the difference in optical parameters between the display block and the target display character is too small, which indicates that it is necessary to perform adjustment processing on the target display character to obtain the superimposed character, so that the target display character can be displayed normally on the display block after the superimposed character is superimposed with corresponding display block later.

The superimposed character is configured to be subsequently superimposed with the corresponding display block to display the target display character on the display block.

In an embodiment of the present disclosure, the step of performing adjustment processing on the target display character comprises: adjusting the optical parameters of the target display character to obtain a superimposed character, so that the difference between the optical parameter value of the superimposed character and the optical parameter statistical value of the corresponding display block is greater than the preset threshold.

That is, after performing adjustment processing on the target display character, the optical parameter values between the obtained superimposed character and the corresponding display block have sufficient difference, so that after the superimposed character and the display block are subsequently superimposed, the superimposed character can be normally displayed on the display block.

In an embodiment of the present disclosure, the optical parameter is brightness as an example for explanation. In a specific implementation, performing adjustment processing on the target display character comprises: performing color inversion processing on the target display character.

In a specific implementation, the target display characters are usually eye-catching black or white characters. By performing color inversion processing, that is, changing the white target display characters into black superimposed characters, and changing the black target display characters into white superimposed characters, not only is the operation simple, but also the target similar characters can be clearly displayed in the video image after the superimposed characters are subsequently superimposed with the display blocks.

In other embodiments, when the target display character is not a black or white character, for example, a 32-bit or 16-bit color, the step of performing color inversion processing on the target display character includes bitwise inversion processing.

In other embodiments, the optical parameter may also be other types of optical parameters, such as chromaticity. Accordingly, in response to a determination that a difference value between the chromaticity statistical value of the current block and the chromaticity value of the corresponding target display character is less than or equal to the preset threshold, performing adjustment processing on the target display character. Performing adjustment processing on the target display character comprises: performing color adjustment processing on the target display character corresponding to the current display block to obtain the superimposed character, the difference value between the chromaticity value of the superimposed character and the chromaticity statistical value of the corresponding display block is greater than the preset threshold. As an example, performing color adjustment processing on the target display character corresponding to the current display block may comprise: adjusting the white balance and color richness of the target display character.

Continuing to refer to FIG. 1, step S5: performing character superimposition processing on the area to be superimposed. Performing character superimposition processing on the area to be superimposed, to display the target display character in the area to be superimposed.

In an embodiment of the present disclosure, the character superimposition processing comprises step S51: superimposing the superimposed character with the corresponding display block.

The superimposed character is a display character that has been adjusted so that the optical parameter values of the superimposed characters are sufficiently different from the optical parameter statistical values of the corresponding display blocks. Accordingly, after the superimposed characters are superimposed on the corresponding display blocks, the target display characters can be clearly displayed and easily distinguished on the display blocks, thereby ensuring that the content information additionally displayed on the video screen can be displayed normally, thereby optimizing the user experience and perception.

It should be noted that in an embodiment of the present disclosure, in response to a determination that the difference value is greater than the preset threshold, determining there is no need to perform adjustment processing; the character superimposition processing further comprises step S52: in response to a determination that there is no need to perform adjustment processing, superimposing the target display character with the corresponding display block.

That is, when the target display character is directly superimposed on the corresponding display block without the need for adjustment processing, the target display character can be normally displayed on the display block so that the target display character is clear and easy to identify.

In a specific implementation, after obtaining the superimposed characters and before performing character superimposition processing, the video image processing method further comprises: Step S6: obtaining a superimposed canvas based on the superimposed characters and the target display characters. The superimposed canvas is configured to be superimposed with the current video image.

In an embodiment of the present disclosure, the superimposed canvas contains the superimposed characters and their corresponding position information, and the target display characters and their corresponding position information.

Correspondingly, performing character superimposition processing on the area to be superimposed comprises: superimposing the video image with the superimposed canvas.

Correspondingly, the embodiment of the present disclosure also provides a video image processing apparatus. FIG. 3 shows a schematic block diagram of a video image processing apparatus in an embodiment of the present disclosure.

Referring to FIG. 3, the video image processing apparatus, comprising: an obtaining unit 10 configured to obtain an area to be superimposed in a video image, wherein the area to be superimposed contains a plurality of display blocks; an optical parameter statistical unit 20 configured to perform optical parameter statistical processing on each display block to obtain an optical parameter statistical value, wherein the optical parameter statistical unit is a hardware unit; a determining unit 30 configured to determine whether an adjustment processing needs to be performed on the target display character based on a difference value between the optical parameter statistical value and an optical parameter value of a target display character; a character adjusting unit 40 configured to perform adjustment processing on the target display character to obtain a superimposed character in response to a determination that the difference value is less than or equal to a preset threshold, wherein a difference value between an optical parameter value of the superimposed character and the optical parameter statistical value of a corresponding display block is greater than the preset threshold; and a character superimposing unit 50 configured to perform character superimposition processing on the area to be superimposed, wherein the character superimposing unit comprises: a first subunit 501 configured to superimpose the superimposed character with the corresponding display block.

In the video image processing apparatus, the optical parameter statistical unit 20 performs optical parameter statistical processing on each display block to obtain an optical parameter statistical value, wherein the optical parameter statistical unit 20 is a hardware unit; the determining unit 30 based on a difference value between the optical parameter statistical value and an optical parameter value of a target display character, determines whether an adjustment processing needs to be performed on the target display character; the character adjusting unit 40 in response to a determination that the difference value is less than or equal to a preset threshold, performs adjustment processing on the target display character; therefore, the embodiments of the present disclosure completes the statistics of local optical parameters of video images by adding a small number of hardware units without using software to perform optical parameter statistical processing, which correspondingly reduces the CPU load, amount of computation and bandwidth, and requires little modification to the hardware modules, which is also beneficial to reducing the complexity of chip design and area occupied by the chip.

The obtaining unit 10 obtains an area to be superimposed in a video image and a plurality of display blocks inside it.

The area to be superimposed is the area in the original video image where characters need to be superimposed.

Specifically, based on actual needs, content such as menus, prompt information, dates, addresses, icons (such as logos), camera information, etc. can be superimposed in the area to be superimposed, thereby providing additional display information based on the video screen.

The area to be superimposed contains a plurality of display blocks so that subsequently the optical parameter statistical unit 20 can perform optical parameter statistics on each display block respectively.

Specifically, in an embodiment of the present disclosure, the obtaining unit 10 obtains the position information of the area to be superimposed, and the position information and size of the display block. In a specific implementation, obtaining unit 10, based on the size of the superimposed characters and the position information of the superimposed characters in the original video image, obtains the position information of the area to be superimposed, and the position information and size of the display block.

With reference to FIG. 2, an area M to be superimposed in a frame of video image is shown. As shown in FIG. 2, as an embodiment, the area to be superimposed includes 6 display blocks: A, B, C, D, E, and F. In an embodiment of the present disclosure, the shape of the display block is a rectangle.

In a specific implementation, the size and number of the display blocks can be flexibly set according to actual needs, and the size of the display blocks can be the same or different.

As an example, obtaining unit 10 obtains the area to be superimposed in the video image and performs area division processing on the area to be superimposed to obtain the multiple display blocks. That is to say, obtaining unit 10 firstly obtains the area to be superimposed, and then dividing the area to be superimposed into a plurality of the display blocks.

In a specific implementation, the obtaining unit 10, based on the size of the superimposed characters, performs area division processing on the area to be superimposed to obtain the multiple display blocks. For example, if the size of the superimposed characters is 32*32, then the size of the display block is 32*32 or 16*32.

Accordingly, in an embodiment of the present disclosure, the display block corresponds to one or more superimposed characters.

In an embodiment of the present disclosure, the video image processing apparatus further comprises: a post-processing module (not shown) configured to perform post-processing on the video image, wherein the post-processing module comprises: a cropping processing unit 60 configured to perform cropping processing on the video image and output a cropped image.

Performing cropping processing on the video image to retain only the required image content, thereby determining the final output image size. In an embodiment of the present disclosure, the cropped image includes multiple rows of sub-images.

In other embodiments, the post-processing module may also omit the cropping processing unit.

Correspondingly, the obtaining unit 10 is configured to obtain an area to be superimposed in the cropped image.

The size of the final output video image can be confirmed by cropped video images. By obtaining the area to be superimposed in the cropped image, the obtaining unit 10 can obtain the information of the area to be superimposed based on the size of the final output image, and the position accuracy of the area to be superimposed can be ensured accordingly.

Moreover, in the field of image processing, in the process of post-processing the video image by the post-processing module, the pixel information at each position in the image is usually obtained, such as the optical parameter value of each pixel. After the cropping processing unit 60 in the post-processing module is executed, using the optical parameter statistics unit 20 to perform optical parameter statistical processing, so that the optical parameter statistics unit 20 can directly perform optical parameter statistical processing based on the optical parameter values of pixels at various positions output by the cropping processing unit 60, and no need to call data from DDR and generate additional DDR reading and writing, which is beneficial to reducing the amount of computation, CPU load, and bandwidth.

In addition, the optical parameter statistical unit 20 can be attached to the post-processing module and can be easily designed as an online module, which correspondingly reduces the changes to the existing hardware modules, thereby reducing the complexity of chip design and is beneficial to saving chip area.

It should be noted that, in an embodiment of the present disclosure, the cropping processing unit 60 outputs multiple cropped images with different resolutions.

Specifically, in an embodiment of the present disclosure, the post-processing module further includes: a scaling unit (not shown) configured to perform scaling processing on the video image to output multiple video images with different resolutions. The scaling unit performs scaling processing on the video image to output multiple video images with different resolutions, thereby meeting the requirements for different resolutions in different scenarios.

Accordingly, after the scaling unit performs cropping processing on the video image, the cropping processing unit 60 performs cropping processing on the multiple video images with different resolutions respectively to output the multiple cropped images with different resolutions.

In other embodiments, the post-processing module may also omit the scaling unit.

It should also be noted that, in an embodiment of the present disclosure, the video image processing method is applied to a surveillance camera scenario as an example for explanation, and the post-processing module further includes: a covering unit (not shown) configured to perform covering processing on the video image to output covered image to the scaling unit.

The covering unit performs covering processing on the video image, so that based on actual needs, covering the area in the video image that is not expected to be exposed (for example: the area in the image that may expose personal privacy).

Specifically, the area in the video image that is not expected to be exposed can be covered with a pure color area.

In other embodiments, based on actual needs, the step of the covering processing can also be omitted.

In an embodiment of the present disclosure, the video image processing apparatus further comprising: an information configuration unit 80 configured to configure the information of the area to be superimposed and display block obtained by the obtaining unit 10 to the optical parameter statistical unit 20.

The information configuration unit 80 configures the information of the display block to the optical parameter statistical unit 20 so that the optical parameter statistical unit 20 can perform optical parameter statistical processing on the display block based on the configured information of the display block.

In an embodiment of the present disclosure, the information of the display blocks includes position information and size information of each display block.

In a specific implementation, the information configuration unit 80 can be CPU, and CPU obtains the information of the area to be superimposed and the display blocks, and then configures information of the display block to the optical parameter statistical unit 20.

Specifically, after CPU obtains the information of the area to be superimposed and the display blocks, CPU stores the information of the area to be superimposed and the display block in a register so that the optical parameter statistical unit 20 acquires the information of the area to be superimposed and the display block from the register.

In a specific implementation, the register may be configured inside the post-processing module to facilitate the interaction between software and hardware.

The optical parameter statistical unit 20 is configured to perform optical parameter statistical processing on display blocks to obtain an optical parameter statistical value, thereby the determining unit 30 can determine whether an adjustment processing needs to be performed on the target display character based on a difference value between the optical parameter statistical value and an optical parameter value of a target display character.

The optical parameter statistical unit 20 is a hardware unit, therefore, an embodiment of the present disclosure completes the statistics of local optical parameters of video images by adding a small number of hardware units to the video image processing apparatus without using software to perform optical parameter statistical processing, which correspondingly reduces the CPU load, amount of computation and bandwidth, and requires little modification to the hardware modules, which is also beneficial to reducing the complexity of chip design and area occupied by the chip.

In an embodiment of the present disclosure, the optical parameter statistical unit 20 obtains the optical parameter statistical value of all pixels in each display block to realize the optical parameter statistical processing. Wherein, the optical parameter statistical value of the pixel may be the sum of the optical parameters of all pixels, or may be the average value of the optical parameters of all pixels.

In a specific implementation, the optical parameter is brightness; the optical parameter statistical unit 20 is a brightness statistical unit; the brightness statistical unit is configured to perform brightness statistical processing on each display block to obtain brightness statistical value.

Wherein, the brightness statistical value of the pixel may be the sum of the brightness value of all pixels in the current display block, or may be the average value of the brightness value of all pixels in the current display block.

It should be noted that, in an embodiment of the present disclosure, the optical parameter is brightness, the optical parameter statistical unit 20 being a brightness statistical unit is only an example, and the implementation of the optical parameter statistical unit 20 is not limited thereto.

For example: the optical parameter is chromaticity; the optical parameter statistical unit is a chromaticity statistical unit; the chromaticity statistical unit is configured to perform chromaticity statistical processing on each display block to obtain chromaticity statistical value. By obtaining the chromaticity statistical value, each display block can be subsequently compared with the chromaticity value of the corresponding target display character, thereby determining whether adjustment processing needs to be performed on the target display character.

The optical parameter statistical unit 20 is a hardware unit. In a specific implementation, the optical parameter statistical unit can be a logic electrical circuit.

In an embodiment of the present disclosure, the post-processing module comprises a register, and the optical parameter statistical value is stored in the register.

In an embodiment of the present disclosure, the cropping processing unit 60 is configured to perform cropping processing on the video image to output multiple cropped images with different resolutions.

Correspondingly, the video image processing apparatus further comprising: a multiplexer 90 configured to select one cropped image from multiple cropped images during different time periods and output it to the optical parameter statistical unit 20.

The multiplexer 90 selects one cropped image from multiple cropped images during different time periods and outputs it to the optical parameter statistical unit, so that in different time periods, the optical parameter statistical unit 20 can perform optical parameter statistical processing on display blocks in cropped images with different resolutions, thereby enabling time-sharing multiplexing of the optical parameter statistical unit 20. Accordingly, there is no need to respectively set corresponding optical parameter statistical units 20 for the plurality of cropped images, thereby helping to reduce the area occupied by the chip and thereby saving costs.

In a specific implementation, the post-processing module reads and processes the image row by row. There is a corresponding row count inside the post-processing module. After processing the corresponding number of rows, the processing of one frame of the image is completed.

Correspondingly, in an embodiment of the present disclosure, the cropped image includes multiple rows of sub-images output sequentially; the multiple rows of sub-images are sequentially input to the optical parameter statistical unit 20.

Correspondingly, in an embodiment of the present disclosure, the optical parameter statistical unit 20 comprises: a display block determiner (not shown) configured to determine whether the current row of sub-images contains the display block; a statistical processor (not shown) configured to perform optical parameter statistical processing on the display block in the current row of sub-images in response to a determination that the current row of sub-images contains the display block.

Since the cropped image is divided into multiple rows of sub-images, which are input into the optical parameter statistical unit 20 in sequence, it is necessary to determine whether the current row of sub-images contains the display block, so that only the display blocks in the current row of sub-images containing the display blocks is determined, thereby reducing the amount of computation and ensuring that the optical parameter statistical unit correctly performs optical parameter statistical processing on the display blocks.

It should be noted that the post-processing module further comprises: a mirror-flipping unit 70 configured to perform mirror/flipping processing on the cropped image after the optical parameter statistical unit performs optical parameter statistical processing on each of the display blocks, and outputs the processed image.

In other embodiments, the mirror-flipping unit can also be omitted.

The determining unit 30 determines whether an adjustment processing needs to be performed on the target display character based on a difference value between the optical parameter statistical value and an optical parameter value of a target display character.

Wherein the target display characters are characters that need to be superimposed and displayed on each display block in the area to be superimposed so that additional display information can be provided based on the video picture.

Based on a difference value between the optical parameter statistical value and an optical parameter value of a target display character, determining whether an adjustment processing needs to be performed on the target display character, thereby ensuring that the target display character can be normally displayed on each display block.

Specifically, the target display characters may include menus, prompt information, dates, addresses, icons (such as logos), camera information, and the like.

In an embodiment of the present disclosure, the display block corresponds to one or more superimposed characters. Therefore, the determining unit 30, based on a difference value between the optical parameter statistical value and an optical parameter value of a target display character, determines whether an adjustment processing needs to be performed on the target display character.

In an embodiment of the present disclosure, the optical parameter is brightness, therefore, the determining unit 30, based on a difference value between the brightness statistical value and an optical brightness value of a target display character, determines whether an adjustment processing needs to be performed on the target display character.

In other embodiments, the optical parameter may also be other types of optical parameters, such as chromaticity. Accordingly, the determining unit, based on a difference value between the chromaticity statistical value of the current block and the optical chromaticity value of the corresponding target display character, determines whether adjustment processing needs to be performed on the target display character.

Specifically, in an embodiment of the present disclosure, the determining unit 30 is configured to determine whether the difference value is greater or equal to a preset threshold; in response to a determination that the difference value is less than or equal to a preset threshold, determine that it is necessary to perform adjustment processing; in response to a determination that the difference value is greater than the preset threshold, determine that there is no need to perform adjustment processing.

The determining unit 30 compares the difference value between the optical parameter statistical value and the optical parameter value of the target display character with the preset threshold. When the difference value is less than or equal to the preset threshold, it indicates that the difference in optical parameters between the display block and the target display character is too small. If the display block and the corresponding target display character are directly superimposed, the target display character cannot be displayed normally on the display block. Therefore, it is determined that it is necessary to perform adjustment processing on the target display character so that the target display character can be displayed normally on the display block.

When the difference is greater than the preset threshold, it indicates that the optical parameter values between the display block and the target display character are sufficiently different, so that after the display block and the corresponding target display character are superimposed, the target display character can be normally displayed on the display block as the background.

In a specific implementation, the preset threshold is set based on an experience value or user preference.

In an embodiment of the present disclosure, the determining unit 30 is configured to call the optical parameter statistical value from the register.

The character adjusting unit 40 performs adjustment processing on the target display character to obtain a superimposed character in response to a determination that the difference value is less than or equal to a preset threshold, wherein a difference value between an optical parameter value of the superimposed character and the optical parameter statistical value of a corresponding display block is greater than the preset threshold so that after the character superimposing unit 50 superimposes the superimposed character and the corresponding display block, the target display character can be normally displayed on the display block.

The superimposed character is configured to be subsequently superimposed with the corresponding display block to display the target display character on the display block.

In an embodiment of the present disclosure, the character adjusting unit 40 is configured to adjust the optical parameters of the target display character to obtain a superimposed character, so that the difference value between the optical parameter value of the superimposed character and the optical parameter statistical value of the corresponding display block is greater than the preset threshold.

That is, after performing adjustment processing on the target display character, the optical parameter values between the obtained superimposed character and the corresponding display block have sufficient difference, so that after the character superimposing unit 50 superimposes the superimposed character and the display block, the superimposed character can be normally displayed on the display block.

In an embodiment of the present disclosure, the optical parameter is brightness as an example for explanation. In a specific implementation, the character adjusting unit 40 performing adjustment processing on the target display character may comprise: performing color inversion processing on the target display character.

In a specific implementation, the target display characters are usually eye-catching black or white characters. By performing color inversion processing, that is, changing the white target display characters into black superimposed characters, and changing the black target display characters into white superimposed characters, not only is the operation simple, but also the target similar characters can be clearly displayed in the video image after the superimposed characters are subsequently superimposed with the display blocks.

In other embodiments, when the target display character is not a black or white character, for example, a 32-bit or 16-bit color, the character adjusting unit performing color inversion processing on the target display character includes bitwise inversion processing.

In other embodiments, the optical parameter may also be other types of optical parameters, such as chromaticity. Accordingly, in response to a determination that a difference value between the chromaticity statistical value of the current block and the chromaticity value of the corresponding target display character is less than or equal to the preset threshold, the chromaticity performs adjustment processing on the target display character. Specifically, the character adjusting unit performs color adjustment processing on the target display character corresponding to the current display block to obtain the superimposed character, and the difference value between the chromaticity value of the superimposed character and the chromaticity statistical value of the corresponding display block is greater than the preset threshold. As an example, the character adjusting unit performing color adjustment processing on the target display character corresponding to the current display block may comprise: adjusting the white balance and color richness of the target display character.

The character superimposing unit 50 performs character superimposition processing on the area to be superimposed, to display the target display character in the area to be superimposed.

In an embodiment of the present disclosure, the first subunit 501 is configured to perform superimposition processing on each display block based on the superimposed character.

The superimposed character is a display character that has been adjusted so that the optical parameter values of the superimposed characters are sufficiently different from the optical parameter statistical values of the corresponding display blocks. Accordingly, after the superimposed characters are superimposed on the corresponding display blocks, the target display characters can be clearly displayed and easily distinguished on the display blocks, thereby ensuring that the content information additionally displayed on the video screen can be displayed normally, thereby optimizing the user experience and perception.

In an embodiment of the present disclosure, the character superimposing unit 50 further comprises: a second subunit 502 configured to superimpose the target display character with the corresponding display block in response to a determination that there is no need to perform adjustment processing.

That is, when the target display character is directly superimposed on the corresponding display block without the need for adjustment processing, the target display character can be normally displayed on the display block so that the target display character is clear and easy to identify.

In a specific implementation, obtaining a superimposed canvas based on the superimposed characters and the target display characters. The superimposed canvas is configured to be superimposed with the current video image.

In an embodiment of the present disclosure, the superimposed canvas contains the superimposed characters and their corresponding position information, and the target display characters and their corresponding position information.

Correspondingly, the character superimposing unit 50 superimposes the video image with the superimposed canvas.

To solve the above problems, the embodiments of the present disclosure provide a device, which can implement the video image processing method provided by the embodiment of the present disclosure by loading the above-mentioned video image processing method in the form of a program.

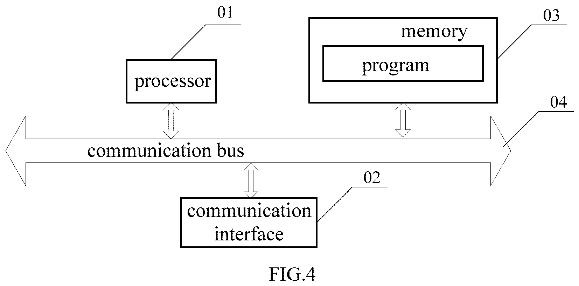

An optional hardware structure of the device provided by the embodiment of the present disclosure may be as shown in FIG. 4, comprising: at least one processor 01, at least one communication interface 02, at least one memory 03, and at least one communication bus 04.

In the embodiment of the present disclosure, the quantity of the processor 01, the communication interface 02, the memory 03, and the communication bus 04 are at least one, and the processor 01, the communication interface 02, and the memory 03 communicate with each other through the communication bus 04.

Optionally, the communication interface 02 may be an interface of a communication module for network communication, such as an interface of a GSM module.

Optionally, the processor 01 may be a central processing unit (CPU), an ASIC (Application Specific Integrated Circuit), or one or more integrated circuits configured to implement the embodiments of the present disclosure.

Optionally, the memory 03 may include high-speed RAM, and may also include non-volatile memory, such as at least one disk memory.

Wherein memory 03 stores at least one or more computer instructions, one or more computer instructions are executed by processor 01 to implement the video image processing method provided by the embodiments of the present disclosure.

It should be noted that the above-mentioned implementation terminal device may also include other devices (not shown) that may not be necessary for understanding the contents disclosed in the embodiments of the present disclosure; since these other devices may not be necessary for understanding the contents disclosed in the embodiments of the present disclosure, the embodiments of the present disclosure will not introduce them one by one.

Correspondingly, the embodiments of the present disclosure also provide a storage medium, wherein the storage medium stores at least one or more computer instructions, the one or more computer instructions are executed to implement the video image processing method provided by the embodiments of the present disclosure.

The storage medium is computer-readable, and the storage medium may be a read-only memory (ROM), a random-access memory (RAM), a USB flash drive, a mobile hard disk, a magnetic disk or an optical disk, or any other medium that can store program codes.

The embodiments of the present disclosure described above are combinations of elements and features of the present disclosure. The elements or features may be considered optional unless mentioned otherwise. Each element or feature may be practiced without being combined with other elements or features. In addition, the embodiments of the present disclosure may be configured by combining some elements and/or features. The order of operations described in the embodiments of the present disclosure may be rearranged. Some constructions of any one embodiment may be included in another embodiment and may be replaced with corresponding constructions of another embodiment. It is obvious to those skilled in the art that claims that have no explicit citation relationship with each other among the appended claims may be combined in the embodiments of the present disclosure or may be included as new claims in amendments after filing the present application.

Embodiments of the present disclosure can be realized by various means such as hardware, firmware, software, or a combination thereof. In the hardware configuration mode, the method according to the embodiments of the present disclosure may be implemented by one or more application-specific integrated circuits (ASICs), digital signal processors (DSPs), digital signal processing devices (DSPDs), programmable logic devices (PLDs), field programmable Gate arrays (FPGA), processors, controllers, micro-controllers, microprocessors, etc. to achieve.

In a firmware or software configuration, the embodiments of the present disclosure can be implemented in the form of modules, procedures, functions, and the like. The software codes may be stored in memory units and executed by processors. The memory unit is located inside or outside the processor and can transmit data to and receive data from the processor via various known means.

Although the embodiments of the present disclosure are disclosed as above, the present disclosure is not limited therein.

Any person skilled in the art may make various changes and modifications without departing from the spirit and scope of the present disclosure, and therefore the scope of protection of the present disclosure shall be subject to the scope defined by the claims.

## Claims

1. A video image processing method, comprising:
obtaining an area to be superimposed in a video image, wherein the area to be superimposed contains a plurality of display blocks;
performing optical parameter statistical processing on each display block by an optical parameter statistical unit to obtain an optical parameter statistical value, wherein the optical parameter statistical unit is a hardware unit;
based on a difference value between the optical parameter statistical value and an optical parameter value of a target display character, determining whether an adjustment processing needs to be performed on the target display character;
in response to a determination that the difference value is less than or equal to a preset threshold, performing adjustment processing on the target display character to obtain a superimposed character, wherein a difference value between an optical parameter value of the superimposed character and the optical parameter statistical value of a corresponding display block is greater than the preset threshold; and
performing character superimposition processing on the area to be superimposed, wherein the character superimposition processing comprises: superimposing the superimposed character with the corresponding display block.

2. The video image processing method of claim 1, wherein the video image processing method further comprising: after obtaining an area to be superimposed in a video image and the display blocks, and before performing optical parameter statistical processing on each display block by an optical parameter unit, configuring information of the display block to the optical parameter statistical unit.

3. The video image processing method of claim 1, wherein the video image processing method further comprising: performing post-processing on the video image, wherein the post-processing comprises: performing cropping processing on the video image and outputting a cropped image; and
obtaining an area to be superimposed in a video image comprises: obtaining an area to be superimposed in the cropped image.

4. The video image processing method of claim 3, wherein the cropped image includes multiple rows of sub-images; the multiple rows of sub-images are sequentially input to the optical parameter statistical unit; and
wherein performing brightness statistical processing on each display block by an optical parameter statistical unit comprises: determining whether the current row of sub-images contains the display block; if so, the optical parameter statistical unit performs brightness statistical processing on the display block in the current row of sub-images.

5. The video image processing method of claim 2, 3 or 4, wherein in the step of performing cropping processing on the video image, outputting multiple cropped images with different resolutions; and
the video image processing method further comprising: selecting one cropped image from multiple cropped images during different time periods and outputting it to the optical parameter statistical unit.

6. The video image processing method of claim 1, wherein the optical parameter is brightness;
the optical parameter statistical unit is a brightness statistical unit; performing optical parameter statistical processing on each display block comprises: performing brightness statistical processing on each display block by the brightness statistical unit to obtain a brightness statistical value; and
based on a difference value between the optical parameter statistical value and an optical parameter value of a target display character, determining whether an adjustment processing needs to be performed on the target display character comprises: based on a difference value between the brightness statistical value and the brightness value of the target display character, determining whether a brightness adjustment processing needs to be performed on the target display character.

7. The video image processing method of claim 6, wherein performing adjustment processing on the target display character comprises: performing color inversion processing on the target display character.

8. The video image processing method of claim 1, wherein the optical parameter is chromaticity;
the optical parameter statistical unit is a chromaticity statistical unit; performing optical parameter statistical processing on each display block comprises: performing chromaticity statistical processing on each display block by the chromaticity statistical unit to obtain chromaticity statistical value;
based on a difference value between the optical parameter statistical value and an optical parameter value of a target display character, determining whether an adjustment processing needs to be performed on the target display character comprises: based on a difference value between the chromaticity statistical value and the chromaticity value of the target display character, determining whether a chromaticity adjustment processing needs to be performed on the target display character; and
performing adjustment processing on the target display character comprises:
performing color adjustment processing on the target display character corresponding to the current display block.

9. The video image processing method of any one of claims 1, 6 to 8, wherein in response to a determination that the difference value is greater than the preset threshold, determining there is no need to perform adjustment processing; the character superimposition processing further comprises: in response to a determination that there is no need to perform adjustment processing, superimposing the target display character with the corresponding display block.

10. A video image processing apparatus, comprising:
an obtaining unit configured to obtain an area to be superimposed in a video image, wherein the area to be superimposed contains a plurality of display blocks;
an optical parameter statistical unit configured to perform optical parameter statistical processing on each display block to obtain an optical parameter statistical value, wherein the optical parameter statistical unit is a hardware unit;
a determining unit configured to determine whether an adjustment processing needs to be performed on the target display character based on a difference value between the optical parameter statistical value and an optical parameter value of a target display character;
a character adjusting unit configured to perform adjustment processing on the target display character to obtain a superimposed character in response to a determination that the difference value is less than or equal to a preset threshold, wherein a difference value between an optical parameter value of the superimposed character and the optical parameter statistical value of a corresponding display block is greater than the preset threshold; and
a character superimposing unit configured to perform character superimposition processing on the area to be superimposed, wherein the character superimposing unit comprises: a first subunit configured to superimpose the superimposed character with the corresponding display block.

11. The video image processing apparatus of claim 10, wherein the video image processing apparatus further comprising: an information configuration unit configured to configure information of the area to be superimposed and display block output by the obtaining unit to the optical parameter statistical unit.

12. The video image processing apparatus of claim 10, wherein the video image processing apparatus further comprising: a post-processing module configured to perform post-processing on the video image; the post-processing module comprises: a cropping processing unit configured to perform cropping processing on the video image and output a cropped image; and
the obtaining unit is configured to obtain an area to be superimposed in the cropped image.

13. The video image processing apparatus of claim 12, wherein the cropped image includes multiple rows of sub-images; the multiple rows of sub-images are sequentially input to the optical parameter statistical unit; and
the optical parameter statistical unit comprises: a display block determiner configured to determine whether the current row of sub-images contains the display block; a statistical processor configured to perform optical parameter statistical processing on the display block in the current row of sub-images in response to a determination that the current row of sub-images contains the display block.

14. The video image processing apparatus of claim 12 or 13, wherein the cropping processing unit is configured to perform cropping processing on the video image, and output multiple cropped images with different resolutions; and
the video image processing apparatus further comprising: a multiplexer configured to select one cropped image from multiple cropped images during different time periods and output it to the optical parameter statistical unit.

15. The video image processing apparatus of claim 12, wherein the post-processing module comprises a register, and the statistical value is stored in the register;
the determining unit is configured to call the statistical value from the register.

16. The video image processing apparatus of claim 10, wherein the optical parameter is brightness; the optical parameter statistical unit is a brightness statistical unit, and the brightness statistical unit is configured to perform brightness statistical processing on each display block to obtain a brightness statistical value;
or,
the optical parameter is chromaticity; the optical parameter statistical unit is a chromaticity statistical unit; the brightness statistical unit is configured to perform chromaticity statistical processing on each display block to obtain chromaticity statistical value.

17. The video image processing apparatus of claim 10, wherein the character superimposing unit further comprises: a second subunit configured to superimpose the target display character with the corresponding display block in response to a determination that there is no need to perform adjustment processing.

18. The video image processing apparatus of claim 10, wherein the optical parameter statistical unit contains a logic electrical circuit.

19. A device, comprising at least one memory and at least one processor, the memory stores at least one or more computer instructions, wherein one or more computer instructions are executed by the processor to implement the video image processing method of any one of claims 1-9.

20. A storage medium, wherein the storage medium stores at least one or more computer instructions, one or more computer instructions are executed to implement the video image processing method of any one of claims 1-9.
